# EUROPEAN PATENT APPLICATION

(11) **EP 4 738 443 A2**
(43) Date of publication of application: **06.05.2026**
(21) Application number: 25209390.1
(22) Date of filing: 17.10.2025
(51) Int. Cl.: H01M 4/04, G01B 11/06, G01B 21/04, G01N 21/41, H01M 4/139

(54) **INLINE TERAHERTZ MEASUREMENT DEVICE FOR DRY ELECTRODE FILM MANUFACTURING, AND METHODS THEREOF**

(30) Priority: 05.11.2024 US 202418937956
(71) Applicant: Tesla, Inc., Austin, TX 78725 (US)
(72) Inventor: ZANDIATASHBAR, Ardavan, Austin 78725 (US); EGGLESTON, Bonne, Austin 78725 (US); WANG, Kaiping, Austin 78725 (US); ERBEN, Christoph, Austin 78725 (US); JIN, Shikai, Austin 78725 (US); TANAKA, Kentaro, Austin 78725 (US); PHAM, Minh, Austin 78725 (US)
(74) Representative: Zacco Sweden AB

(57) **Abstract**

A system and method for processing a dry electrode film comprising a roller system, a terahertz measurement device and a dry electrode powder mixture dispenser, are disclosed. The measurement device may comprise a terahertz source and a terahertz sensor. Such terahertz source may be emitted towards an upper and lower surface of the dry electrode film and reflected back towards the terahertz sensor to measure a physical property of the dry electrode film.

## Description

### INCORPORATION BY REFERENCE TO ANY PRIORITY APPLICATIONS

This application claims the benefit of priority to U.S. Patent Application No. 18/937,956, entitled "INLINE TERAHERTZ MEASUREMENT DEVICE FOR DRY ELECTRODE FILM MANUFACTURING, AND METHODS THEREOF,".

### BACKGROUND

### Field

This disclosure relates to systems for fabricating a dry electrode film and methods for processing the same. In particular, the method relates to processing and calibrating a system for processing a dry electrode film using terahertz sources and sensors.

### Description of the Related Art

Dry electrode films for energy storage devices incorporate binder materials combined with active electrode materials. Dry electrode films are produced by calendering a powder mixture without the use of solvents, resulting in a unique manufacturing process and potential assembly challenges. For example, while properties of wet solvent produced electrode films may controlled through slurry deposition processes, dry electrode films are formed on calender rolls prior to deposition on a current collector to form an electrode. As such, other methods and systems specifically directed to controlling the properties of dry electrode films may be helpful.

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In some aspects, a system for processing a dry electrode film is described. The system for processing a dry electrode film comprises a roller system comprising a calender roller; a measurement device positioned over the calender roller and comprising a terahertz source and a terahertz sensor, wherein the terahertz source is configured to emit a terahertz radiation pulse and the terahertz sensor is configured to detect a terahertz reflection of the terahertz radiation pulse; and a dry electrode powder mixture dispenser, wherein the dry electrode powder mixture dispenser is configured to dispense dry electrode material onto the calender roller, wherein the terahertz source is inline with the terahertz sensor.

In some embodiments, the system further comprises an additional calender roller and an additional measurement device, wherein the additional measurement device is positioned over the additional calender roller. In some embodiments, the terahertz radiation pulse comprises a spot size, a peak width, a frequency, or any combination thereof. In some embodiments, the spot size comprises a diameter of about 0.05-0.5 mm. In some embodiments, the frequency is about 0.05-5.0 THz. In some embodiments, the peak width is about 1-5 ps. In some embodiments, the terahertz sensor is configured to measure a physical property selected from the group consisting of a mass density, a loading, a uniformity, a thickness, a basis weight, and combinations thereof. In some embodiments, the terahertz sensor is configured to measure a time of flight of the terahertz radiation pulse, an intensity of the terahertz radiation pulse, an intensity of the terahertz reflection, or any combination thereof. In some embodiments, the terahertz sensor is configured to measure an intensity of the terahertz reflection. In some embodiments, the system further comprises a current collector dispenser.

In some aspects, a method of calibrating the system is described. The method comprises disposing a dry electrode film over the calender roller, wherein the dry electrode film comprises a marker and a film area downstream of the marker, and wherein the film area comprises a first major surface and a second major surface opposite the first major surface; emitting a marker terahertz radiation pulse from a terahertz source to the marker to form a marker reflection; detecting the marker reflection with the terahertz sensor; emitting the terahertz radiation pulse from the terahertz source at a first time point to the film area to form a first terahertz reflection from the first major surface and a second terahertz reflection from the second major surface; detecting the first terahertz reflection at a second time point with the terahertz sensor, and detecting the second terahertz reflection at a third time point with the terahertz sensor; and sampling the film area.

In some aspects, a method of processing a dry electrode film is described. The method comprises disposing a dry electrode film over a calender roller, wherein the dry electrode film comprises a first major surface and a second major surface opposite the first major surface; rotating the calender roller thereby forming a moving dry electrode film; emitting a terahertz radiation pulse to the moving dry electrode film at a first time point to form a first terahertz reflection from the first major surface and a second terahertz reflection from the second major surface; and detecting the first terahertz reflection at a second time point by a terahertz sensor and detecting the second terahertz reflection at a third time point by a terahertz sensor.

In some embodiments, the method further comprises quantifying a difference between the first time point and the second time point, thereby determining a first major surface time of flight, and quantifying a difference between the first time point and the third time point, thereby determining a second major surface time of flight. In some embodiments, the method further comprises determining an intensity of the terahertz radiation pulse at the first time point, determining an intensity of the first terahertz reflection at the second time point, determining an intensity of the second terahertz reflection at the third time point. In some embodiments, emitting the terahertz radiation pulse comprises projecting a spot size, a peak width, a frequency, or any combination thereof. In some embodiments, the spot size comprises a diameter of about 0.05-0.5 mm. In some embodiments, the frequency is at least 0.05 terahertz to no greater than 5.0 terahertz. In some embodiments, the peak width is at least 1.0 picoseconds to no greater than 5 picoseconds. In some embodiments, detecting comprises determining a physical property selected from the group consisting of a mass density, a loading, a uniformity, a thickness, a basis weight, and combinations thereof. In some embodiments, the method further comprises disposing a current collector over the dry electrode film. In some embodiments, the method further comprises dispensing a dry electrode material onto the calender roller, wherein the dry electrode material comprises a dry powder.

### BRIEF DESCRIPTION OF THE DRAWINGS

FIG. 1 is a cross-section view illustration of a measurement device positioned over a dry electrode material disposed on a calender roller, according to some embodiments.
FIG. 2 is a cross-section view illustration of a system for processing a dry electrode film including a measurement device, according to some embodiments.
FIG. 3 is a cross-section view illustration of a system for processing a dry electrode film in operation, according to some embodiments.
FIG. 4A is a cross-section view illustration of calibrating systems for processing a dry electrode film, according to some embodiments.
FIG. 4B is front view illustration of calibrating systems for processing a dry electrode film, according to some embodiments.
FIG. 5 is a flowchart showing a method of calibrating a system for processing a dry electrode film, according to some embodiments
FIG. 6 is a flowchart showing a method of processing a dry electrode film, according to some embodiments.

### DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations, in turn, in a manner that may be helpful in understanding certain embodiments; however, the order of description should not be construed to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

Systems and methods for processing a dry electrode film using a roller system and terahertz sources and sensors are described. Generally, there is a lack of rapid feedback to control uniformity of electrode basis weight and thickness during the production process. Conventionally, x-ray and beta-ray systems are used for measurement of electrode basis weight, however, those systems use ionizing sources that have safety concerns, suffer from low speed, lack the desired precision for the desired tolerances, and are not able to report independent measurements from both sides of the electrode. As such, a terahertz pulse is emitted towards a dry electrode film and the reflection thereof is detected from the front and back surfaces of the dry electrode film. By comparing the time difference and the intensity of the reflection, the thickness and basis weight values of the dry electrode film are measured. The measured values are used as feedback to control rollers shear ratios, line load, and gap offset. Measurements variations are used for monitoring the nonuniformity in the produced film.

Additionally, methods of calibrating a system for processing a dry electrode film is described. There is generally a lack of methods for monitoring and calibrating systems of processing dry electrode films as the dry electrode film is being processed. An automation process has been developed to optimize and improve the calibration of inline loading and thickness metrology in cell manufacturing using a gauge with a small spot size. The method of calibrating such systems allows for minimal residual error of the target value that are otherwise caused by errors in offline punch placement and sizing. The collected signal for the metrology gauge is evaluated and calibrated against offline measurements, and the sample on the roller is transferred and scanned by the metrology gauge. The collected terahertz radiation signal is processed using the calibration method to ensure the uniformity of the dry electrode film while it is being processed.

As a result of processing dry electrode films using terahertz radiation, physical properties of the dry electrode film are monitored in situ and during production of the dry electrode film, helping to reduce production time, improving precision of desired tolerances of the dry electrode film desired qualities, and providing independent measurements from both surfaces of the dry electrode film. For example, in situ monitoring of the physical properties of the dry electrode film facilitate increasing production scaling and reduces costs for assembly equipment and manufacturing complexity, and/or increase cell reliability.

### Systems for Processing a Dry Electrode Film

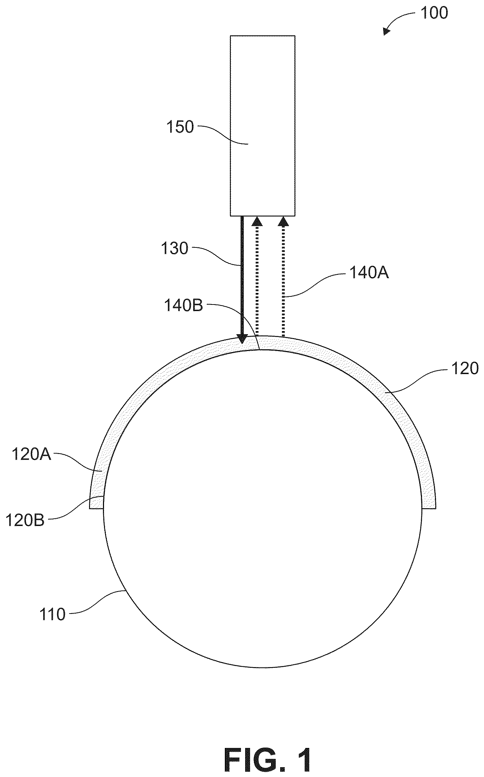

A system for processing a dry electrode film that includes a roller system and a measurement device is described. FIG. 1 is an illustration of a system 100 for processing a dry electrode film that includes a measurement device 150 positioned over a dry electrode film 120 disposed on a calender roller 110. The measurement device 150 includes a terahertz source configured to emit a terahertz radiation pulse 130, and a terahertz sensor configured to detect a first terahertz reflection 140A and a second terahertz reflection 140B of the terahertz radiation pulse 130. As shown in FIG. 1, the terahertz radiation pulse 130 is emitted towards the dry electrode film 120, and a portion of the terahertz radiation pulse 130 is reflected back towards the measurement device 150 from a first major surface 120A of the dry electrode film 120 that faces the measurement device 150 as a first terahertz reflection 140A, and another portion of the terahertz radiation pulse 130 is reflected back towards the measurement device 150 from a second major surface 120B of the dry electrode film 120 that faces the calender roller 110 as a second terahertz reflection 140B. The measurement device 150 is positioned above a calender roller 110 at a 0° angle with respect to the central axis of the calender roller 110. As shown in FIG. 1, the measurement device 150 includes both the terahertz source and the terahertz sensor such that the terahertz source and terahertz sensor are inline with respect to each other.

In some embodiments, the dry electrode films may include a dry active material. For example, the dry electrode film may have been dry processed from a dry powder. In some embodiments, the dry electrode film may include a first major surface and a second major surface. For example, the first major surface may include a surface that is in direct contact with the calender roller, and the second major surface may include an upper surface that is not in direct contact with the calender roller.

In some embodiments, the measurement device may be disposed above the calender such that the terahertz radiation pulse includes a direction substantially perpendicular to a circumference of the calender roller. For example, the measurement device may include a position above the calendar roller such that the terahertz radiation pulse includes a direction vertically downwards towards the calender roller. In some embodiments, the measurement device may include a position above, below, or anywhere therebetween along the circumference of the calender roller. In some embodiments, the measurement device may include a terahertz source that is inline with a terahertz sensor. In some embodiments, the measurement device may have a position that is 0°, 45°, 90°, 135°, 180°, 225°, 270°, 315°, 360°, or any range of angles therebetween, with respect to the circumference of the calender roller. In some embodiments, the measurement device may be disposed above the dry electrode film that is disposed on the calender roller. In some embodiments, the terahertz radiation pulse includes a direction substantially perpendicular to the surface of the dry electrode film. For example, the measurement device may include a position above the dry electrode film such that the terahertz radiation pulse includes a direction vertically downwards towards the dry electrode film. In some embodiments, the measurement device is configured to measure a physical property selected from, e.g., a mass density, a loading, a uniformity, a thickness, a basis weight, and combinations thereof.

In some embodiments, the terahertz radiation pulse may include a direction towards the dry electrode film that is disposed on the calender roller, and the first terahertz reflection and the second terahertz reflection may include a direction away from the dry electrode film. In some embodiments, the measurement device may be configured to detect the first terahertz reflection, the second terahertz reflection, or both. For example, the measurement device may include a terahertz sensor that is configured to detect the first terahertz reflection, the second terahertz reflection, or both.

In some embodiments, the terahertz radiation pulse may include a spot size, a peak width, a frequency, or any combination thereof. In some embodiments, the radiation pulse may be reflected by the first major surface, the second major surface, and/or both. In some embodiments, the radiation pulse may be reflected by the first major surface resulting in a first terahertz reflection. In some embodiments, the radiation pulse may be reflected by the second major surface resulting in a second terahertz reflection. In some embodiments, a time between the emission of the terahertz radiation pulse and the detection of the first and/or second terahertz reflection can be measured. For example, the terahertz radiation pulse can be emitted at a first time, the first terahertz reflection can be detected at a second time, and the second terahertz reflection can be detected at a third time. In some further embodiments, an intensity of the radiation pulse can be detected at a first time upon emittance from the terahertz source, and an intensity of the first and/or second terahertz reflection can be detected upon detection by the terahertz sensor. For example, the terahertz radiation pulse can include a first intensity, the first terahertz reflection can include a second intensity, and the second terahertz reflection can include a third intensity.

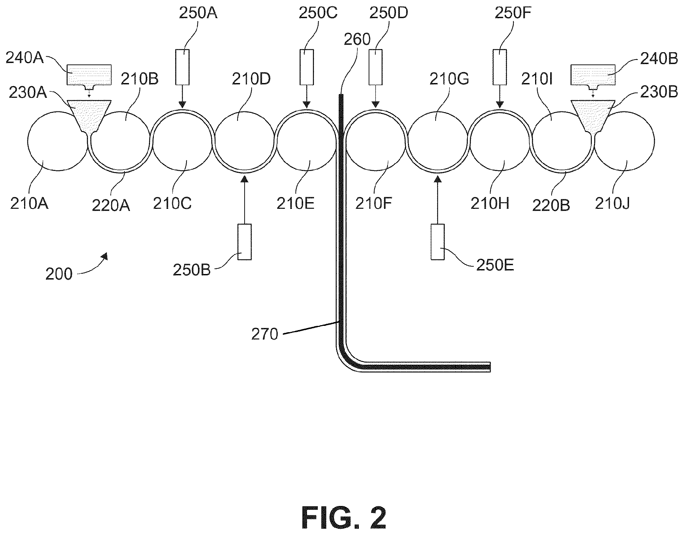

A system for processing a dry electrode film includes, at least, a roller system, a measurement device, and a dry electrode powder mixture dispenser. FIG. 2 is an illustration of a system 200 for processing a dry electrode film 220. As shown in FIG. 2, the roller system includes calender rollers 210A, 210B, 210C, 210D, 210E, 210F, 210G, 210H, 210I and 210J, each calender roller (e.g., 210H) configured to form a dry electrode film from an electrode powder mixture and/or to move the dry electrode film 220A and B across the system 200. It should be realized that each calender roller 210A, 210B, 210C, 210D, 210E, 210F, 210G, 210H 2101, and 210J can be configured to operate independently of the other calender rollers, or can be configured to operate synchronically and/or in coordination with one or more of the other calender rollers 210. As shown in FIG. 2, two calender roller systems (i.e., the system including 210A, 210B, 210C, 210D and 210E, and the system including 210F, 210G, 210H, 2101, and 210J) are configured to mirror each other. The calender rollers 210A, 210B, 210C, 210D and 210E are configured to move a first dry electrode film 220A across the system 200 in a first direction, and the calender rollers 210F, 210G, 210H, 2101, and 210J are configured to move a second dry electrode film 220B across the system 200 in a second direction, the second direction opposite the first direction. The first dry electrode film 220A and the second dry electrode film 220B are moved across the system 200 such that they are joined at a central axis of the system 200. As shown in FIG. 2, the first dry electrode film 220A is configured to join with the second dry electrode film 220B after each is disposed on the calender rollers 210E and 210F, respectively. As further shown in FIG. 2, the first dry electrode film 220A and the second dry electrode film 220B are joined with each other and a current collector 260 that is disposed between the first dry electrode film 220A and the second dry electrode film 220B to form a dry double sided electrode 270. It should be realized that the system may include a single dry electrode film such that there is no second electrode film to join therewith. Additionally, a current collector may be joined to the single dry electrode film even in the absence of second dry electrode film.

The system 200 also includes measurement devices 250A, 250B, 250C, 250D, 250E and 250F. Each of the measurement devices 250A, 250B, 250C, 250D, 250E and 250F include a terahertz source and a terahertz sensor that are configured inline with respect to each other. Additionally, each of the measurement devices 250A, 250B, 250C, 250D, 250E and 250F is positioned either above (e.g., 250A) or below (e.g., 250B) one of the calender rollers (e.g., 250A is above 210C). Each of the measurement devices 250A, 250B, 250C, 250D, 250E and 250F are configured to emit a terahertz pulse 130 towards the dry electrode film 220 and to detect a first terahertz reflection and a second terahertz reflection. It should be realized that the each of the measurement devices 250A, 250B, 250C, 250D, 250E and 250F need not be configured to emit the same terahertz radiation pulse and/or measure the same features of the terahertz reflection. Alternatively, some measurements devices can detect a terahertz reflection to measure an intensity thereof, while other can detect a terahertz reflection to record a time of detection thereof.

As shown in FIG. 2, the system 200 includes a dry electrode powder mixture dispenser 240A and 250B. The dry electrode powder mixture dispenser 240A and 250B is positioned at the start of each roller system and is configured to contain and dispense the dry electrode material 230A and 250B into the system 200. The dry electrode material 230A and 250B is dispensed onto a calender rollers, here shown as 210A and 210J, from which it is processed into the dry electrode film 220.

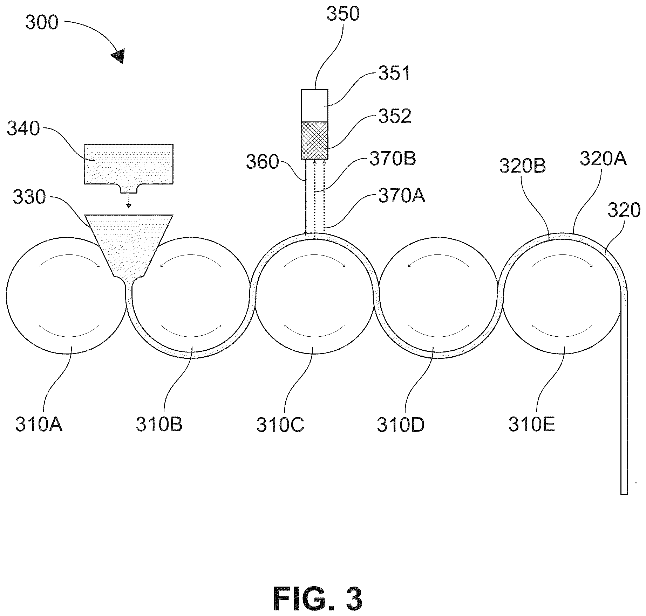

FIG. 3 is a cross-section view illustration of a system 300 for processing a dry electrode film with some additional details relative to the roller system of FIG. 2 in operation. As shown in FIG. 3, the roller system includes calender rollers 310A, 310B, 310C, 310D, and 310E. As shown in FIG. 3, the system 300 includes a measurement device 350, which includes a terahertz source 351 configured to emit a terahertz radiation pulse 360, and a terahertz sensor 352 configured to detect terahertz signals, such as a first terahertz reflection 370A and a second terahertz reflection 370B of the terahertz radiation pulse 360. The terahertz radiation pulse 360 is emitted towards the dry electrode film 320, and a portion of the terahertz radiation pulse 360 is reflected back towards the terahertz sensor 352 from a first major surface 320A of the dry electrode film 320 that faces the measurement device 350 as a first terahertz reflection 370A, and another portion of the terahertz radiation pulse 360 is reflected back towards the measurement device 350 from a second major surface 320B of the dry electrode film 320 that faces the calender roller 310C as a second terahertz reflection 370B. The system 300 includes a dry electrode powder mixture dispenser 340. The dry electrode powder mixture dispenser 340 is positioned at the start of each roller system and is configured to contain and dispense the dry electrode material 330 into the system 300. The dry electrode material 330 is dispensed between a nip formed between calender rollers 310A and 310B, from which a dry electrode film 320 if formed and further processed by calender rollers 310C, 310D, and 310E.

In some embodiments, the roller system may include one or more calender rollers and/or one or more measurement devices. In some embodiments, the one or more measurement devices may be positioned at 0°, 45°, 90°, 135°, 180°, 225°, 270°, 315°, 360°, or any range of angles therebetween, with respect to the circumference of each of the one or more calender rollers. In some embodiments, each calender roller includes more than one measurement device positioned thereover. In some embodiments, at least one of the one or more calender rollers does not include a measurement device positioned thereover.

In some embodiments, a dry electrode powder mixture dispenser may be configured to store and release dry electrode material into the system. For example, the dry electrode powder mixture dispenser may store a dry powder and be configured to dispense the dry powder onto at least one of the one or more calender rollers.

In some embodiments, the one or more calender rollers may be configured to move the dry electrode film. In some further embodiments, the one or more calender rollers may be configured to move the dry electrode film across the system for processing. In some embodiments, the one or more measurement devices may be configured to emit a terahertz radiation pulse as the dry electrode film moves across the system. In some embodiments, the one or more measurement devices may be configured to detect a first terahertz reflection, a second terahertz reflection, or both, as the dry electrode film moves across the system.

In some embodiments, the one or more measurement devices may be configured to measure a physical property, such as mass density, loading, uniformity, thickness, basis weight, or combinations thereof, as the dry electrode film moves across the system. In some embodiments, each of the one or more measurement devices may be configured to measure a different physical property. For example, one measurement device may be configured to measure the loading of the dry electrode film, and another may be configured to measure the uniformity of the dry electrode film.

In some further embodiments, the system may include a current collector dispenser that is configured to dispense a current collector. For example, the current collector dispenser may be positioned over the one or more calender rollers and configured to dispense the current collector. In some embodiments, the current collector may be disposed over the dry electrode film. In some embodiments, the current collector may be combined with the dry electrode film. For example, the current collector may be disposed between a first dry electrode film and a second dry electrode film. In some embodiments, the current collector may be combined with a single dry electrode film.

### Systems and Methods of Calibrating Systems for Processing a Dry Electrode Film

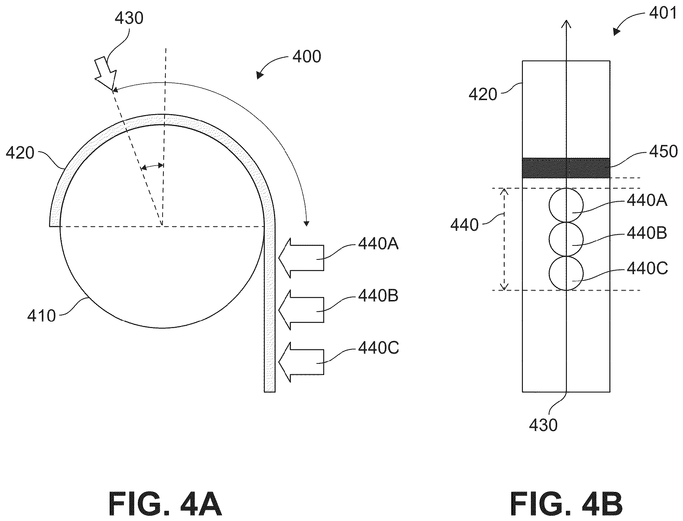

FIGS. 4A and 4B are a cross-section view illustration 400 and front view illustration 401, respectively, of a calibrating system for processing a dry electrode film 420. A terahertz source 430 is positioned over a dry electrode film 420, where the dry electrode film 420 is disposed on a calender roller 410. The dry electrode film 420 includes a marker 450, and the terahertz source 430 is configured to emit a marker terahertz radiation pulse that is configured to detect the marker 450. The marker 450 is configured to distinguish a film area 440, the film area 440 including one or more film area samples 440A, 440B, and 440C. A first film area sample 440A, a second film area sample 440B, and a third film area sample 440C are evaluated for a physical property, e.g., a mass density, a loading, a uniformity, a thickness, a basis weight, and/or combinations thereof.

In some embodiments, the calibration system for processing a dry electrode film may include one or more samples. For example, the sampling area can contain one or more samples that are configured to be excised for further evaluation. By way of further example, the samples may be excised and analyzed for their physical properties, including but not limited to, a mass density, a loading, a uniformity, a thickness, a basis weight, and/or combinations thereof. In some embodiments, the physical properties of the samples are compared to a measurement detected by the measurement device. For example, the terahertz reflection(s) detected by the measurement device can correspond with a measurement of a physical property, the physical property measured by the measurement device compared with the physical property measured in the sample to calibrate and/or determine the accuracy of the measurement device.

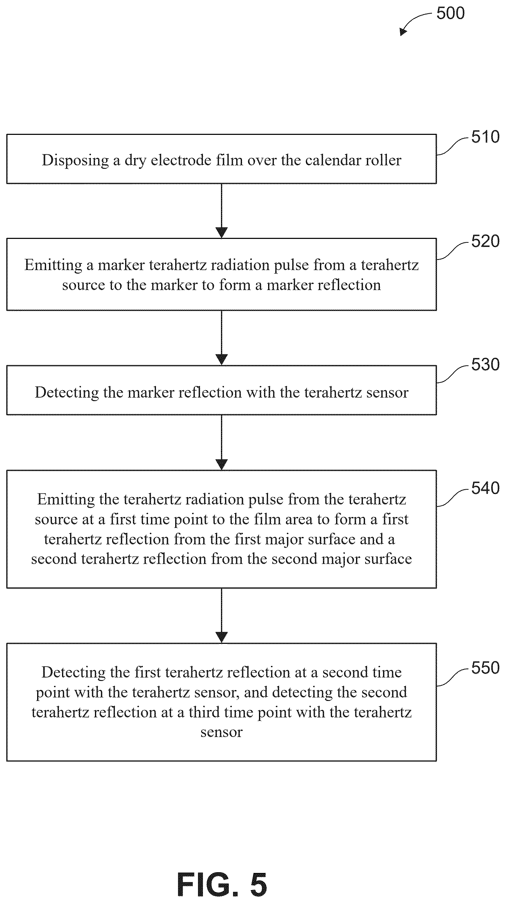

FIG. 5 is a flowchart showing a method of calibrating a system for processing a dry electrode film 500. The method of calibrating 500 begins by disposing a dry electrode film over the calender roller 510. The dry electrode film includes a marker and a film area that is downstream of the marker. Additionally, the dry electrode film includes a first major surface and a second major surface. The next step 520 includes emitting a marker terahertz radiation pulse from a terahertz source that is inline with a terahertz sensor, such that the marker terahertz radiation pulse contacts the dry electrode film and is reflected back towards the terahertz sensor. Next, the terahertz sensor detects the marker reflection 530. Step 540 includes emitting the terahertz radiation pulse from the terahertz source at a first time point to the film area to form a first terahertz reflection from the first major surface and a second terahertz reflection from the second major surface. The next step 550 includes detecting the first terahertz reflection at a second time point with the terahertz sensor and detecting the second terahertz reflection at a third time point with the terahertz sensor. The film area is subsequently sampled in step 560.

In some embodiments, a method of calibrating begins by disposing a dry electrode film over the calender roller. For example, the dry electrode film may include a marker and a film area downstream of the marker. By way of further example, the film area may include a first major surface and a second major surface opposite the first major surface. In some embodiments, the method may include emitting a marker terahertz radiation pulse from a terahertz source to the marker to form a marker reflection. In some embodiments, a first marker reflection and a second marker reflection may be detected from a first marker major surface and a second marker major surface, respectively. For example, detecting the marker reflection can alert the terahertz sensor that the film area is below the terahertz sensor. In some embodiments, the method may include detecting the marker reflection with the terahertz sensor. In some embodiments, the method may include emitting the terahertz radiation pulse from the terahertz source at a first time point to the film area to form a first terahertz reflection from the first major surface and a second terahertz reflection from the second major surface. In some embodiments, the method may include detecting the first terahertz reflection at a second time point with the terahertz sensor and detecting the second terahertz reflection at a third time point with the terahertz sensor. In some embodiments, the method may include sampling the film area. For example, sampling the film area may include physically excising one or more samples from the film area.

### Methods of Processing a Dry Electrode Film

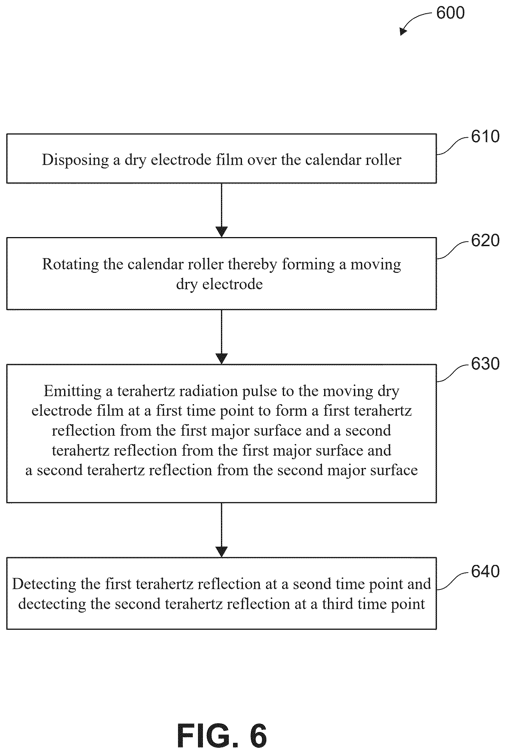

FIG. 6 is a flowchart showing a method of processing a dry electrode film 600. The method of processing a dry electrode film begins by disposing a dry electrode film over a calender roller 610, the dry electrode film including a first major surface and a second major surface opposite the first major surface. The method 600 includes step 620 of rotating the calender roller such as to form a moving dry electrode film. Next, the method 600 includes step 630 of emitting a terahertz radiation pulse to the moving dry electrode film at a first time point to form a first terahertz reflection from the first major surface and a second terahertz reflection from the second major surface. Subsequently, the method 600 includes step 640 of detecting the first terahertz reflection at a second time point and detecting the second terahertz reflection at a third time point.

In some embodiments, the method of processing a dry electrode film may include evaluating a physical property by the terahertz sensor. For example, the physical property may include a mass density, a loading, a uniformity, a thickness, a basis weight, and combinations thereof. In some embodiments, the method may further include combining a current collector over the dry electrode film. For example, disposing may include coupling the current collector between two dry electrode films. By way of further example, coupling the current collector between two dry electrode films can include embedding the current collector between two dry electrode films. In some embodiments, the method includes quantifying a difference between the first time point and the second time point, thereby determining a first major surface time of flight, and quantifying a difference between the first time point and the third time point, thereby determining a second major surface time of flight. In some embodiments, the method further includes determining an intensity of the terahertz radiation pulse at the first time point. In some embodiments, the method includes determining an intensity of the first terahertz reflection at the second time point and/or determining an intensity of the second terahertz reflection at the third time point. In some embodiments, the method includes emitting the terahertz radiation pulse including projecting a spot size, a peak width, a frequency, or any combination thereof. In some embodiments, the terahertz radiation pulse has a spot size diameter of, or about, of at least, or of at least about, 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.10 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, or 2 mm, or any range of values therebetween. In some embodiments, terahertz radiation pulse has a frequency of, of about, of at least, or of at least about, 0.05 terahertz, 0.1 terahertz, 0.2 terahertz, 0.3 terahertz, 0.4 terahertz, 0.5 terahertz, 0.6 terahertz, 0.7 terahertz, 0.8 terahertz, 0.9 terahertz, 1.0 terahertz, 1.1 terahertz, 1.2 terahertz, 1.3 terahertz, 1.4 terahertz, 1.5 terahertz, 1.6 terahertz, 1.7 terahertz, 1.8 terahertz, 1.9 terahertz, 2.0 terahertz, 2.1 terahertz, 2.2 terahertz, 2.3 terahertz, 2.4 terahertz, 2.5 terahertz, 2.6 terahertz, 2.7 terahertz, 2.8 terahertz, 2.9 terahertz, 3.0 terahertz, 3.1 terahertz, 3.2 terahertz, 3.3 terahertz, 3.4 terahertz, 3.5 terahertz, 3.6 terahertz, 3.7 terahertz, 3.8 terahertz, 3.9 terahertz, 4.0 terahertz, 4.1 terahertz, 4.2 terahertz, 4.3 terahertz, 4.4 terahertz, 4.5 terahertz, 4.6 terahertz, 4.7 terahertz, 4.8 terahertz, 4.9 terahertz, 5.0 terahertz, or any value therebetween. In some embodiments, the terahertz radiation pulse has a peak width of, of about, of at most, or of at most about, 1 picosecond, 1.5 picoseconds, 2 picoseconds, 2.5 picoseconds, 3 picoseconds, 3.5 picoseconds, 4 picoseconds, 4.5 picoseconds, 5 picoseconds, or any range of values therebetween. In some embodiments, emitting includes transmitting the terahertz radiation pulse from a terahertz sensor. In some embodiments, detecting includes determining a physical property, e.g., but not limited to, mass density, a loading, a uniformity, a thickness, a basis weight, and combinations thereof. In some embodiments, emitting the terahertz radiation pulse includes emitting a laser pulse. In some embodiments, detecting includes detection by a terahertz sensor. In some embodiments, the method further includes positioning the terahertz sensor perpendicularly to a circumference of the calender roller. In some embodiments, the method may further include forming the dry electrode film by adding a dry electrode material to the calender roller. In some embodiments, the method may include storing a dry electrode material in a dry electrode powder mixture dispenser and dispensing the dry electrode material onto a calender roller.

### Electrode Film Materials and Electrode Films

Electrode film mixtures and electrode films formed using apparatuses and systems described herein. In some embodiments, one or more electrode film mixtures described herein may be combined with one or more other electrode film components and subsequently calendared to form an electrode film. The electrode films described herein can be used to form anodes and/or cathodes of an energy storage device, for example, batteries, capacitors, capacitor-battery hybrids, fuel cells, combinations thereof, and the like. The energy storage device may operate with or without lithium. For example, the electrode film may be coupled to a current collector of an anode or cathode to form an electrode, such as by using a lamination process. In some embodiments, the electrode film may be laminated on a current collector. In some embodiments, lamination is performed at a high temperature (e.g., 50-100°C). In some embodiments, the electrode films can be used to fabricate batteries, such as lithium ion batteries, or other metal ion batteries. In some embodiments, the electrode films can be used to fabricate ultracapacitors, such as electric double layer capacitors (EDLC). In some embodiments, the electrode films can be used to fabricate lithium ion capacitors. The electrode film may be a self-supporting electrode film.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture.

In some embodiments, the active layer or electrode film formed from the electrode film mixture using the dry process may be free from, or substantially free from, any processing additives such as solvents and solvent residues resulting therefrom. In some embodiments, a milling process may be a dry process free from, or substantially free from, any processing additives such as solvents and solvent residues resulting therefrom.

In some embodiments, the resulting active layer or electrode films are self-supporting films formed using the dry process. In some embodiments, the resulting active layer or electrode films are free-standing films formed using the dry process from the electrode film mixture. A process for forming an active layer or electrode film can include fibrillizing the fibrillizable binder component(s) such that the film may comprise fibrillized binder. In further embodiments, a free-standing active layer or electrode film may be formed in the absence of a current collector. In still further embodiments, an active layer or electrode film may comprise a fibrillized polymer matrix such that the film is self-supporting. A matrix, lattice, or web of fibrils can be formed to provide mechanical structure to the electrode film.

In some embodiments, the electrode film includes active cathode material. The active cathode material can form the dry electrode material (e.g., powder) discussed herein. In some embodiments, cathode active materials can comprise, for example, a metal oxide, metal sulfide, or a lithium metal oxide. The lithium metal oxide can be, for example, a lithium nickel manganese cobalt oxide (NMC), a lithium manganese oxide (LMO), a lithium iron phosphate (LFP), a lithium cobalt oxide (LCO), a lithium titanate (LTO), and/or a lithium nickel cobalt aluminum oxide (NCA). In some embodiments, cathode active materials can comprise, for example, a layered transition metal oxide (such as LiCoO2 (LCO), Li(NiMnCo)O2 (NMC) and/or LiNi0.8Co0.15Al0.05O2 (NCA)), a spinel manganese oxide (such as LiMn2O4 (LMO) and/or LiMn1.5Ni0.5O4 (LMNO)), an olivine (such as LiFePO4), silicon, silicon oxide (SiOx), aluminum, tin, tin oxide (SnOx), manganese oxide (MnOx), molybdenum oxide (MoO2), molybdenum disulfide (MoS2), nickel oxide (NiOx), or copper oxide (CuOx). The cathode active material can comprise sulfur or a material including sulfur, such as lithium sulfide (Li2S), or other sulfur-based materials, or a mixture thereof.

In some embodiments, the electrode film includes an anode active material. The anode active material can form the dry electrode material (e.g., powder) discussed herein. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, an electrode film mixture and/or electrode film comprises a carbon material configured to reversibly intercalate lithium ions. The carbon material can form a portion of a dry electrode material (e.g., powder) discussed herein. In some embodiments, the electrode film comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions.

In some embodiments, an electrode film mixture and/or electrode film includes a conductive additive. The conductive additive material can form a portion of the dry electrode material (e.g., powder) discussed herein. In some embodiments, the conductive additive may comprise a conductive carbon additive. In some embodiments, the conductive carbon additive comprises a carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film mixture may comprise a binder (e.g., an air milled binder, an air milled fibrillizable binder, an air milled fibrillized binder) in, or in about, 1 wt.%, 1.5 wt.%, 2 wt.%, 2.5 wt.%, 3 wt.%, 3.5 wt.%, 4 wt.%, 4.5 wt.%, 5 wt.%, 5.5 wt.%, 6 wt.%, 6.5 wt.%, 7 wt.%, 7.5 wt.%, 8 wt.%, 8.5 wt.%, 8.5 wt.%, 9 wt.%, 9.5 wt.% or 10 wt.% or any range of values therebetween, for example, from about 1 wt.% to about 10 wt.%, wherein the wt.% is based on the weight of the electrode film mixture.

In some embodiments, the binder (e.g., an air milled binder, an air milled fibrillizable binder, an air milled fibrillized binder) may comprise a polymeric binder. In some embodiments, the binder can include polytetrafluoroethylene (PTFE), a polyolefin, polyalkylenes, polyethers, styrene-butadiene, co-polymers of polysiloxanes and polysiloxane, branched polyethers, polyvinylethers, co-polymers thereof, and/or admixtures thereof. The binder can include a cellulose, for example, carboxymethylcellulose (CMC). In some embodiments, the polyolefin can include polyethylene (PE), polypropylene (PP), polyvinylidene fluoride (PVDF), co-polymers thereof, and/or mixtures thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or admixtures thereof. In some embodiments, the binder may be a thermoplastic. In some embodiments, the binder may comprise a fibrillizable polymer.

### Electrodes and Energy Storage Devices

An energy storage system or device includes a positive electrode (i.e., cathode), a negative electrode (i.e., anode), a separator disposed therebetween, and an electrolyte positioned within a housing. Each electrode includes an electrode film disposed over a current collector. The electrode includes an electrode film disposed over a current collector. In some embodiments, the current collector is a foil. In some embodiments, the current collector is aluminum foil, a copper foil, or combinations thereof. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween. In some embodiments, an active layer is disposed on each side of the current collector. In some embodiments, the electrode is a double-sided electrode including two electrode films disposed on opposite sides of the current collector. In some embodiments, the double-sided electrode may include a current collector, a top electrode film, and a bottom electrode film. In some embodiments, each of the two electrode films can have any suitable shape, size and thickness.

In some embodiments, the energy storage device comprises an anode electrode positioned between two cathode electrodes. In some embodiments, the energy storage device is selected from the group consisting of a cylindrical energy storage device, a stacked prismatic energy storage device, and a spiral-wound prismatic energy storage device. In some embodiments, the energy storage device is a battery. In some embodiments, the energy storage device is a lithium-ion battery. In some embodiments, the energy storage devices may be a battery, capacitor, capacitor-battery hybrid, fuel cell, or combinations thereof.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF₆), lithium bis(trifluoromethanesulfonyl)imide (LiFSI), lithium tetrafluoroborate (LiBF₄), lithium perchlorate (LiClO₄), lithium bis(trifluoromethansulfonyl)imide (LiN(SO₂CF₃)₂), lithium trifluoromethansulfonate (LiSO₃CF₃), lithium bis(oxalato)borate (LiB(C₂O₄)₂), lithium bis(fluorosulfonyl)imide (LiN(SO₂F)₂, lithium difluoro(oxalato)borate (LiC₂BF₂O₄) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), and combinations thereof. In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

## Claims

1. A system for processing a dry electrode film, comprising:
a roller system comprising a calender roller;
a measurement device positioned over the calender roller and comprising a terahertz source and a terahertz sensor, wherein the terahertz source is configured to emit a terahertz radiation pulse and the terahertz sensor is configured to detect a terahertz reflection of the terahertz radiation pulse; and
a dry electrode powder mixture dispenser, wherein the dry electrode powder mixture dispenser is configured to dispense dry electrode material onto the calender roller, wherein the terahertz source is inline with the terahertz sensor.

2. The system of claim 1, further comprising an additional calender roller and an additional measurement device, wherein the additional measurement device is positioned over the additional calender roller.

3. The system of claim 1, wherein the terahertz radiation pulse comprises a spot size, a peak width, a frequency, or any combination thereof.

4. The system of claim 3, wherein the spot size comprises a diameter of about 0.05-0.5 mm and/or wherein the frequency is about 0.05-5.0 THz, and/or wherein the peak width is about 1-5 ps.

5. The system of any one of claims 1-4, wherein the terahertz sensor is configured to measure a physical property selected from a group consisting of a mass density, a loading, a uniformity, a thickness, a basis weight, and combinations thereof.

6. The system of any one of claims 1-5, wherein the terahertz sensor is configured to measure a time of flight of the terahertz radiation pulse, an intensity of the terahertz radiation pulse, an intensity of the terahertz reflection, or any combination thereof; preferably wherein the terahertz sensor is configured to measure an intensity of the terahertz reflection.

7. The system of any one of claims 1-6, further comprising a current collector dispenser.

8. A method of calibrating the system of any one of claims 1-7, comprising:
disposing a dry electrode film over the calender roller, wherein the dry electrode film comprises a marker and a film area downstream of the marker, and wherein the film area comprises a first major surface and a second major surface opposite the first major surface;
emitting a marker terahertz radiation pulse from a terahertz source to the marker to form a marker reflection;
detecting the marker reflection with the terahertz sensor;
emitting the terahertz radiation pulse from the terahertz source at a first time point to the film area to form a first terahertz reflection from the first major surface and a second terahertz reflection from the second major surface;
detecting the first terahertz reflection at a second time point with the terahertz sensor, and detecting the second terahertz reflection at a third time point with the terahertz sensor; and
sampling the film area.

9. A method of processing a dry electrode film, comprising:
disposing a dry electrode film over a calender roller, wherein the dry electrode film comprises a first major surface and a second major surface opposite the first major surface;
rotating the calender roller thereby forming a moving dry electrode film;
emitting a terahertz radiation pulse to the moving dry electrode film at a first time point to form a first terahertz reflection from the first major surface and a second terahertz reflection from the second major surface; and
detecting the first terahertz reflection at a second time point by a terahertz sensor and detecting the second terahertz reflection at a third time point by a terahertz sensor.

10. The method of claim 9, further comprising quantifying a difference between the first time point and the second time point, thereby determining a first major surface time of flight, and quantifying a difference between the first time point and the third time point, thereby determining a second major surface time of flight.

11. The method of claim 9 or 10, further comprising determining an intensity of the terahertz radiation pulse at the first time point, determining an intensity of the first terahertz reflection at the second time point, determining an intensity of the second terahertz reflection at the third time point.

12. The method of any one of claims 9-11, wherein emitting the terahertz radiation pulse comprises projecting a spot size, a peak width, a frequency, or any combination thereof, preferably wherein the spot size comprises a diameter of about 0.05-0.5 mm, and/or wherein the frequency is at least 0.05 terahertz to no greater than 5.0 terahertz, and/or wherein the peak width is at least 1.0 picoseconds to no greater than 5 picoseconds.

13. The method of any one of claims 9-12, wherein detecting comprises determining a physical property selected from a group consisting of a mass density, a loading, a uniformity, a thickness, a basis weight, and combinations thereof.

14. The method of any one of claims 9-13, further comprising disposing a current collector over the dry electrode film.

15. The method of any one of claims 9-14, further comprising dispensing a dry electrode material onto the calender roller, wherein the dry electrode material comprises a dry powder.
